Europäisches Patentamt

(19) European Patent Office

Office européen des brevets

(11) Numéro de publication: **0 079 255**
**B1**

(12) # FASCICULE DE BREVET EUROPEEN

(45) Date de publication du fascicule du brevet:
02.05.85

(51) Int. Cl.⁴: **F 02 B 37/12**

(21) Numéro de dépôt: 82401862.6

(22) Date de dépôt: 11.10.82

(54) **Dispositif perfectionné de commande de la pression de suralimentation d'un moteur turbocompressé permettant d'améliorer la réponse dynamique.**

(30) Priorité: 05.11.81 FR 8120766

(43) Date de publication de la demande:
18.05.83 Bulletin 83/20

(45) Mention de la délivrance du brevet:
02.05.85 Bulletin 85/18

(84) Etats contractants désignés:
DE GB IT SE

(56) Documents cités:
DE - A - 2 362 133
FR - A - 2 035 829
FR - A - 2 330 861
US - A - 3 233 403
US - A - 4 222 240

(73) Titulaire: REGIE NATIONALE DES USINES RENAULT,
Boîte postale 103 8-10 avenue Emile Zola,
F-92109 Boulogne-Billancourt (FR)

(72) Inventeur: Arnaud, Henri, 9, Lotissement Châteaux
Cerny, F-91590 La Ferté-Alais (FR)

ACTORUM AG

## Description

La présente invention concerne la commande de la vanne de décharge des turbocompresseurs.

On sait que les moteurs thermiques alimentés par turbocompresseur comportent toujours une vanne de décharge by-passant le côté turbine du turbocompresseur, faute de quoi la pression d'alimentation au moteur risquerait d'augmenter indéfiniment jusqu'à une valeur dangereuse.

Pour commander ce clapet de décharge, il est connu (voir par exemple DE A N° 2362133) d'utiliser un vérin pneumatique à membrane, avec ressort de rappel agissant dans le sens de la fermeture du clapet, et de faire agir sur ce vérin, dans le sens de l'ouverture, la pression prélevée à la sortie de la partie compresseur soit en amont, soit en aval du papillon des gaz, ou à l'échappement du moteur en amont de la turbine. Ce dispositif présente l'avantage de la simplicité et permet d'éviter que la pression à l'admission atteigne une valeur dangereuse pour le moteur.

Il est connu cependant qu'un moteur turbocompressé peut supporter, en régime transitoire, un taux de suralimentation nettement supérieur à celui admis en régime permanent. Cela s'explique en particulier par le fait que la température des parois au contact des gaz dans le moteur est à priori moins élevée en début d'accélération qu'en régime stabilisé équivalent, et également par une meilleure capacité de refroidissement de l'échangeur de chaleur. D'autres facteurs, tel l'enrichissement en accélération, contribuent à autoriser un relèvement momentané de la pression limite de suralimentation. Il serait donc souhaitable, dans le dispositif simple rappelé ci-dessus, de retarder l'instant auquel a lieu l'intervention de la vanne de décharge lors des périodes d'accélération.

L'invention consiste en un dispositif de commande de la pression de suralimentation d'un moteur turbocompressé, du type comportant un turbocompresseur dont la partie turbine est alimentée par la conduite d'échappement du moteur, avec une vanne de décharge en dérivation, et dont la partie compresseur alimente la conduite d'admission du moteur pourvue d'un papillon des gaz, et dans lequel la vanne de décharge est commandée par un vérin pneumatique à ressort de rappel agissant dans le sens de la fermeture et dont la chambre de commande est raccordée par un conduit de liaison à l'une desdites conduites d'admission ou d'échappement, caractérisé par le fait que, dans ledit conduit de liaison, est interposée une valve à retard agencée de manière à restreindre fortement l'écoulement des gaz uniquement dans le sens allant de ladite conduite vers la chambre du vérin.

La sécurité du moteur est assurée, de préférence, par une vanne auxiliaire de décharge montée sur le circuit d'admission du moteur, en aval du compresseur, et actionnée par la pression régnant dans le collecteur d'admission, en aval du papillon des gaz; dans une version simplifiée, la fonction sécurité est assurée par une soupape automatique sensible à la pression régnant au droit de son implantation. Dans les deux cas, le débit de décharge est ramené, de préférence, à l'entrée du compresseur, ce qui a un effet favorable sur le temps de réponse du turbocompresseur.

On peut également garantir la sécurité du moteur en by-passant la valve à retard dans son ensemble par une vanne de sécurité commandée par un autre vérin pneumatique alimenté par la pression régnant dans la tubulure d'admission en aval du papillon des gaz.

D'autres particularités de l'invention apparaîtront dans la description qui va suivre d'un mode de réalisation pris comme exemple et représenté sur le dessin annexé, sur lequel:

la fig. 1 représente schématiquement l'ensemble du dispositif dans la configuration préférée de l'invention;

la fig. 2 correspond à la variante simplifiée, et

la fig. 3 correspond à l'autre variante de réalisation.

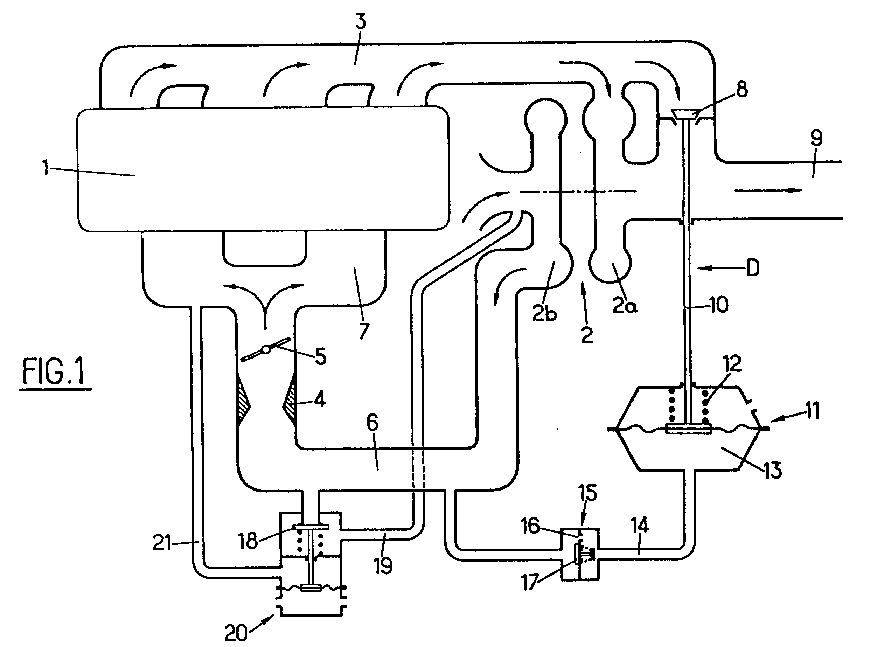

On voit sur la fig. 1 le moteur 1 équipé d'un turbocompresseur 2 dont la partie turbine 2a est alimentée par la tubulure d'échappement 3 du moteur et dont la partie compresseur 2b aspire l'air atmosphérique et alimente le dispositif habituel à venturi 4 et à papillon des gaz 5 par une conduite 6. Le papillon des gaz règle ainsi le débit d'air admis dans la tubulure d'admission 7.

D'une manière connue, l'ensemble comporte une vanne de décharge D permettant à une fraction plus ou moins grande des gaz d'échappement provenant de 3 de passer directement dans le conduit d'échappement 9 sans traverser la turbine 2a. Cette vanne D comporte un clapet 8 solidaire d'une tige 10 commandée par un vérin pneumatique 11, généralement du type à membrane avec un compartiment à l'atmosphère contenant un ressort 12, agissant dans le sens de la fermeture du clapet 8, et un compartiment 13 réuni par une tubulure 14 à la conduite 6 raccordant la sortie du compresseur 2a au venturi 4.

Conformément à l'invention, et pour les raisons exposées plus haut, on interpose dans la tubulure 14 une valve à retard 15 constituée par un étranglement 16 disposé en parallèle avec un clapet antiretour 17 ou un ensemble équivalent. Ce clapet antiretour ou cet ensemble sont disposés de manière à restreindre fortement l'écoulement des gaz seulement dans le sens de la conduite 6 vers le vérin 13.

On comprend donc facilement que, lors des accélérations, cette valve à retard 15 temporise le remplissage de la chambre 13 du vérin 11 et, par conséquent, retarde l'ouverture du clapet de décharge 8 afin d'autoriser un dépassement momentané de la pression de suralimentation maximale admise en régime stabilisé facilitant l'accélération, et cela sans modifier la pression finale régnant dans la chambre 13 ni par conséquent le réglage permanent du clapet 8.

En variante, et comme cela est connu, la chambre 13 du vérin 11 pourrait être reliée par la tubulure 14, non à la conduite 6, mais à la tubulure

d'admission 7, ou encore à l'échappement 3 du moteur, côté amont de la turbine 2a.

Par ailleurs, il est prévu une vanne auxiliaire de décharge 18 disposée dans un circuit 19 reliant la conduite 6 d'alimentation du moteur située en aval du compresseur et en amont du papillon des gaz 5, de préférence au circuit situé en amont du compresseur ou, à défaut, à l'atmosphère. Cette vanne auxiliaire 18 est actionnée par un vérin pneumatique 20 à ressort taré dont la chambre de commande est raccordée par une tubulure 21 à la tubulure d'admission 7, en aval du papillon des gaz 5.

Si la pression réelle dans la tubulure d'admission 7 atteint une valeur dangereuse pour le moteur, la vanne auxiliaire 18 s'ouvre sous l'action du vérin 20, qui est taré à une valeur supérieure à celle du vérin 11, provoquant ainsi une limitation de la pression de suralimentation en tenant compte, par conséquent, que le papillon des gaz 5 peut être plus ou moins fermé. Par rapport à une décharge à l'atmosphère, la décharge de la conduite d'admission 6 vers l'entrée du compresseur 2b permet de récupérer une partie de l'énergie de compression. Ce dispositif de sécurité permet de bénéficier au maximum de l'effet de surcompression temporaire engendré par le dispositif à retard, sans risque pour le moteur, grâce à sa rapidité de réponse. Il a, d'autre part, pour avantage de ne pas affecter la vitesse de rotation d'ensemble du turbocompresseur, et, par conséquent, l'effet bénéfique sur le temps de réponse en accélération procuré par la valve à retard 15.

L'ensemble selon l'invention demeure donc relativement simple et peu onéreux, tout en améliorant fortement la réponse dynamique du moteur.

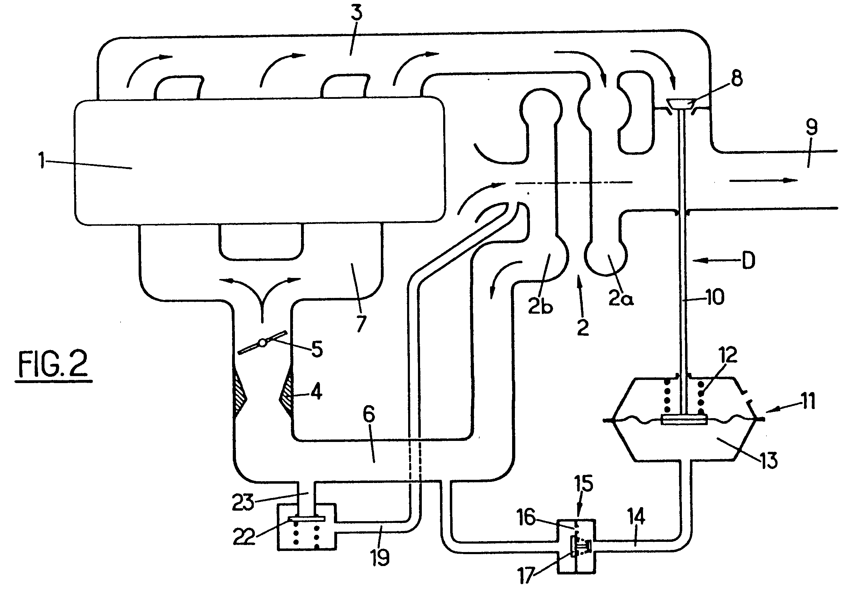

Une variante de l'invention est représentée schématiquement sur la fig. 2; elle diffère de la précédente par une simplification du dispositif de sécurité; dans ce cas, la décharge est contrôlée par une soupape automatique 22 dont l'ouverture dépend directement de la pression régnant au débouché 23 du conduit 19 dans la tubulure d'admission. Pour certaines applications, en particulier lorsque le dosage du carburant est réalisé par un système d'injection, on peut implanter le débouché 23 du conduit 19 sur le circuit d'admission du moteur en aval du papillon des gaz 5 sans modifier la richesse du mélange, et l'on est ramené pratiquement à la configuration précédente.

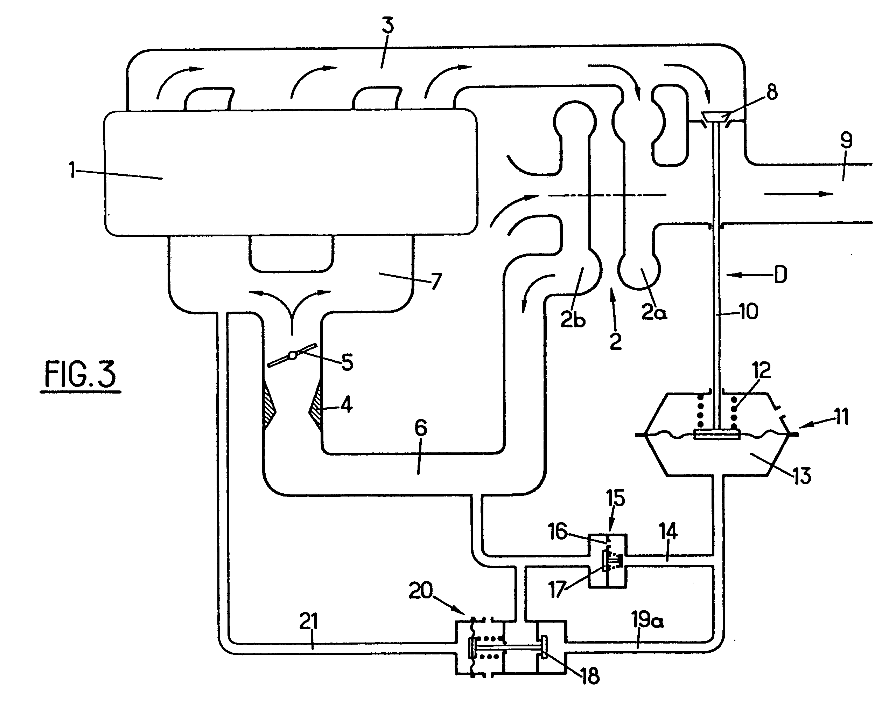

Une autre variante de l'invention, qui se distingue également par la conception du dispositif de sécurité, est représentée sur la fig. 3; dans ce sens, il est prévu une vanne auxiliaire de décharge 18 disposée dans un circuit 19a en parallèle avec la valve à retard 15, cette vanne auxiliaire 18 étant elle-même commandée par un petit vérin pneumatique 20 à ressort taré dont la chambre de commande est raccordée par une tubulure 21 à la tubulure d'admission 7, en aval du papillon des gaz 5.

Ce dispositif de sécurité actionne donc le vérin pneumatique principal 11 dans le sens de la décharge en court-circuitant la valve à retard 15, mais seulement si la pression réelle dans la conduite d'admission 7 risque d'être dangereuse pour le moteur, en tenant compte par conséquent, comme dans le cas de la fig. 1, que le papillon des gaz 5 peut être plus ou moins partiellement fermé.

## Revendications

1. Dispositif de commande de la pression de suralimentation d'un moteur turbocompressé, du type comportant un turbocompresseur (2) dont la partie turbine (2a) est alimentée par la conduite d'échappement (3) du moteur (1), avec une vanne de décharge (8) en dérivation, et dont la partie compresseur (2b) alimente la conduite d'admission (6, 7) du moteur (1) pourvue d'un papillon des gaz (5), et dans lequel la vanne de décharge (8) est commandée par un vérin pneumatique (11) à ressort de rappel (12) agissant dans le sens de la fermeture et dont la chambre de commande (13) est raccordée par un conduit de liaison (14) à l'une desdites conduites d'admission (6, 7) ou d'échappement (3), caractérisé par le fait que, dans ledit conduit de liaison (14), est interposée une valve à retard (15) agencée de manière à restreindre fortement l'écoulement des gaz uniquement dans le sens allant de ladite conduite (6, 7) vers la chambre (13) du vérin (11).

2. Dispositif selon la revendication 1, caractérisé par le fait qu'il comporte une vanne auxiliaire de décharge (18) disposée dans un circuit (19) de décharge du côté refoulement du compresseur et commandée par un vérin pneumatique auxiliaire (20) à ressort taré dont la chambre de commande est raccordée par une conduite (21) à la tubulure d'admission (7) en aval du papillon des gaz (5), de telle manière que l'augmentation de pression dans cette tubulure d'admission au-delà d'un seuil dangereux produise l'ouverture de la vanne auxiliaire (18).

3. Dispositif selon la revendication 1, caractérisé par le fait qu'il comporte une soupape automatique auxiliaire de décharge (22) disposée dans un circuit (19) de décharge du côté refoulement du compresseur et constituée de telle manière que la pression régnant au débouché (23) du conduit (19) dans le circuit en aval du compresseur provoque directement l'ouverture de la soupape (22) lorsque cette pression excède un seuil prédéterminé.

4. Dispositif selon l'une des revendications 2 ou 3, caractérisé en ce que le circuit de décharge (19) relie le circuit en aval du compresseur (2) au circuit en amont du compresseur (2).

5. Dispositif selon l'une des revendications 2 ou 3, caractérisé en ce que le circuit de décharge (19) relie le circuit en aval du compresseur (2) à l'atmosphère.

6. Dispositif selon la revendication 1, caractérisé par le fait qu'il comporte, en outre, une vanne auxiliaire (18) raccordée en parallèle avec ladite valve à retard (15) et commandée par un vérin pneumatique auxiliaire (20) à ressort taré dont la chambre de commande est raccordée par une conduite (21) à la tubulure d'admission (7) en aval du papillon des gaz (5), de telle manière que l'augmentation de pression dans cette tubulure d'admission au-delà d'un seuil dangereux produise l'ouverture de la vanne auxiliaire (18).

7. Dispositif selon l'une des revendications 1 à 6, caractérisé en ce que la valve à retard (15) est constituée par un étranglement (16) et un clapet antiretour (17) placés en parallèle.

## Patentansprüche

1. Steuervorrichtung des Ladedrucks eines aufgeladenen Verbrennungsmotors der Art, die einen Turboauflader (2) aufweist, dessen Turbinenteil (2a) von der Auslassleitung (3) des Motors (1) versorgt wird, mit einem parallel angeordneten Auslassventil (8), und dessen Kompressorteil (2b) die Zufuhrleitung (6, 7) des Motors (1) versorgt, die mit einer Drosselklappe (5) versehen ist und bei der das Auslassventil (8) von einem Druckzylinder (11) mit Rückholfeder (12) gesteuert ist, der in Schliessrichtung wirkt und dessen Steuerkammer (13) über eine Verbindungsleitung (14) mit einer der Zufuhrleitungen (6, 7) oder Auslassleitung (3) verbunden ist, dadurch gekennzeichnet, dass in diese Verbindungsleitung (14) ein Verzögerungsventil (15) eingesetzt ist, das derart ausgestaltet ist, dass es das Strömen der Gase ausschliesslich in Richtung aus der Leitung (6, 7) zur Kammer (13) des Druckzylinders (11) hin stark verringert.

2. Vorrichtung nach Anspruch 1, dadurch gekennzeichnet, dass sie ein zusätzliches Auslassventil (18) aufweist, das in einer Auslassleitung (19) auf der Druckseite des Kompressors angeordnet ist und von einem zusätzlichen Druckzylinder (20) mit tarierter Feder gesteuert ist, dessen Steuerkammer über eine Leitung (21) mit der Zufuhrleitung (7) stromabwärts der Drosselklappe (5) derart verbunden ist, dass eine Erhöhung des Drucks in dieser Zufuhrleitung jenseits einer Gefahrenschwelle das Öffnen des zusätzlichen Ventils (18) bewirkt.

3. Vorrichtung nach Anspruch 1, dadurch gekennzeichnet, dass sie eine zusätzliche automatische Auslassklappe (22) aufweist, die in einem Auslasskreis (19) auf der Druckseite des Kompressors angeordnet ist und derart gebildet ist, dass der an der Mündung (23) der Leitung (19) in den Kreis stromabwärts des Kompressors herrschende Druck direkt das Öffnen der Klappe (22) bewirkt, wenn dieser Druck einen vorgegebenen Schwellwert übersteigt.

4. Vorrichtung nach einem der Ansprüche 2 oder 3, dadurch gekennzeichnet, dass der Auslasskreis (19) den Kreis stromabwärts des Kompressors (2) mit dem Kreis stromaufwärts des Kompressors (2) verbindet.

5. Vorrichtung nach einem der Ansprüche 2 oder 3, dadurch gekennzeichnet, dass der Auslasskreis (19) den Kreis stromabwärts des Kompressors (2) mit der Atmosphäre verbindet.

6. Vorrichtung nach Anspruch 1, dadurch gekennzeichnet, dass sie ausserdem ein zusätzliches Ventil (18) aufweist, das parallel zum Verzögerungsventil (15) angeschlossen ist und von einem zusätzlichen Druckzylinder (20) mit tarierter Feder gesteuert ist, dessen Steuerkammer über eine Leitung (21) mit der Zufuhrleitung (7) stromabwärts der Drosselklappe (5) verbunden ist, derart, dass eine Erhöhung des Drucks in dieser Zufuhrleitung oberhalb eines gefährlichen Schwellwerts das Öffnen des zusätzlichen Ventils (18) bewirkt.

7. Vorrichtung nach einem der Ansprüche 1 bis 6, dadurch gekennzeichnet, dass das Verzögerungsventil (15) aus einer Engstelle (16) und einer Einwegklappe (17) besteht, die parallel angeordnet sind.

## Claims

1. An apparatus for controlling the boost pressure of a turbocharged engine, of the type comprising a turbocharger (2) in which the turbine part (2a) is fed by the exhaust duct (3) of the engine (1), with a discharge valve (8) in a by-pass position, and in which the compressor part (2b) feeds the intake duct (6, 7) of the engine (1), which is provided with a gas butterfly valve (5), and wherein the discharge valve (8) is controlled by a pneumatic jack (11) having a return spring (12) which acts in the direction of closure of the valve and wherein the control chamber (13) is connected by a connecting conduit (14) to one of said intake duct (6, 7) or exhaust duct (3), characterised in that interposed in said connecting conduit (14) is a delay valve (15) so arranged as greatly to restrict the flow of the gases solely in a direction from said duct (6, 7) towards the chamber (13) of the jack (11).

2. An apparatus according to Claim 1, characterised in that it comprises an auxiliary discharge valve (18) which is disposed in a discharge circuit (19) on the delivery side of the compressor and which is controlled by an auxiliary pneumatic jack (20) having a calibrated spring, the control chamber of which is connected by a conduit (21) to the intake manifold (7) downstream of the gas butterfly valve (5), such that the increase in pressure in said intake manifold above a dangerous threshold causes opening of the auxiliary valve (18).

3. An apparatus according to Claim 1, characterised in that it comprises an auxiliary automatic discharge valve (22) which is disposed in a discharge circuit (19) on the delivery side of the compressor and which is so constituted that the pressure obtaining at the opening (23) of the conduit (19) into the circuit downstream of the compressor directly causes opening of the valve (22) when said pressure exceeds a predetermined threshold.

4. An apparatus according to either one of Claims 2 or 3, characterised in that the discharge circuit (19) connects the circuit downstream of the compressor (2) to the circuit upstream of the compressor (2).

5. An apparatus according to either one of Claims 2 or 3, characterised in that the discharge circuit (19) connects the circuit downstream of the compressor (2) to atmosphere.

6. An apparatus according to Claim 1, characterised in that it further comprises an auxiliary valve (18) which is connected in parallel with said delay valve (15) and which is controlled by an auxiliary pneumatic jack (20) having a calibrated spring, the control chamber of which is connected by a conduit (21) to the intake manifold (7) downstream of the gas butterfly valve (5), such that the increase in pressure in said intake manifold beyond a dangerous threshold causes opening of the auxiliary valve (18).

7. An apparatus according to any one of Claims 1 to 6, characterised in that the delay valve (15) is formed by a constriction (16) and a non-return valve (17) which are disposed in parallel.

FIG.1

FIG.2

FIG.3